# FASCICULE DE BREVET EUROPEEN

(11) **EP 0 633 164 B1**
(45) Date de publication et mention de la délivrance du brevet: **06.08.1997**
(21) Numéro de dépôt: 94401042.0
(22) Date de dépôt: 10.05.1994
(51) Int. Cl.: B60Q 3/04

(54) **Module standard de tableau de bord de véhicule**
Standardmodul für Fahrzeugarmaturenbrett
Standard module for vehicle dashboard

(30) Priorité: 06.07.1993 FR 9308263
(43) Date de publication de la demande: 11.01.1995
(73) Titulaire: SOCIETE D'APPLICATIONS GENERALES D'ELECTRICITE ET DE MECANIQUE SAGEM, F-75783 Paris Cédex 16 (FR)
(72) Inventeur: Metais, Derry, F-95650 Genicourt (FR)
(74) Mandataire: Bloch, Gérard

(56) Documents cités:
- EP-A- 0 503 400
- EP-A- 0 508 791
- DE-A- 3 808 826
- US-A- 4 872 415

## Description

Un tableau de bord conventionnel de véhicule comporte une pluralité de modules chacun organisé autour d'un mouvement - par exemple un moteur -, relié à un équipement électrique - une ampoule de feu, un capteur, par exemple - et à une platine de servitude, avec un circuit électrique ou électronique de commande, généralement sur un circuit imprimé, un organe indicateur - par exemple une aiguille - et ses moyens d'indexation et un système d'éclairage de l'organe indicateur. Généralement toujours, le système d'éclairage comporte une boîte à lumière, une source lumineuse sur le fond de la boîte et un conduit optique, le mouvement étant disposé entre le conduit optique et son circuit de commande.

Les caractéristiques de la boîte à lumière dépendent étroitement de celles du mouvement considéré et notamment de la plage d'évolution de l'aiguille, s'il y en a une d'associée au mouvement, qui conditionne au moins en partie la position de la patte de prise de lumière du conduit optique.

Une telle conception de module interdit toute standardisation.

On connaît déjà, notamment par EP-A-0 503 400, un module, d'un tableau de bord de véhicule comportant une face avant, comprenant un organe indicateur ou aiguille indicatrice, un organe d'entrainement ou moteur pour l'organe indicateur et un support d'au moins une source d'éclairage de l'aiguille indicatrice, le support s'étendant sous le pied de l'aiguille indicatrice et celui-ci étant éclairé directement par la source.

Un tel module présente déjà l'intérêt de l'absence de conduit optique d'éclairage et d'une certaine standardisation qui conduit à un gain de temps de montage, une réduction de coût de fabrication et de maintenance.

La présente invention vise à pousser encore ces avantages de gain de temps de montage, de réduction de coût de fabrication et de maintenance.

A cet effet, elle concerne un module du type défini ci-dessus, caractérisé par le fait que ledit support est constitué par un flasque portant un palier de l'arbre de sortie du moteur.

L'élimination du support de la source d'éclairage en tant que tel, pour faire jouer au flasque d'un moteur d'entrainement cette fonction support, est à l'évidence particulièrement avantageuse.

De préférence, le flasque du moteur comporte un alvéole d'éclairage à l'intérieur duquel est disposé la source d'éclairage de l'organe indicateur.

Mais avantageusement, il est prévu sur le flasque deux sources d'éclairage de l'indicateur de couleurs respectives différentes ou une source bicolore, l'indicateur pouvant alors ainsi être un indicateur à changement de couleur.

De préférence encore, le flasque comporte des oreilles d'indexation sur la face avant sur lesquelles sont avantageusement disposées des plages de connexion électrique.

Le flasque, qui supporte des connexions électriques de l'organe d'entrainement, pourrait aussi supporter des moyens de commande de cet organe d'entrainement.

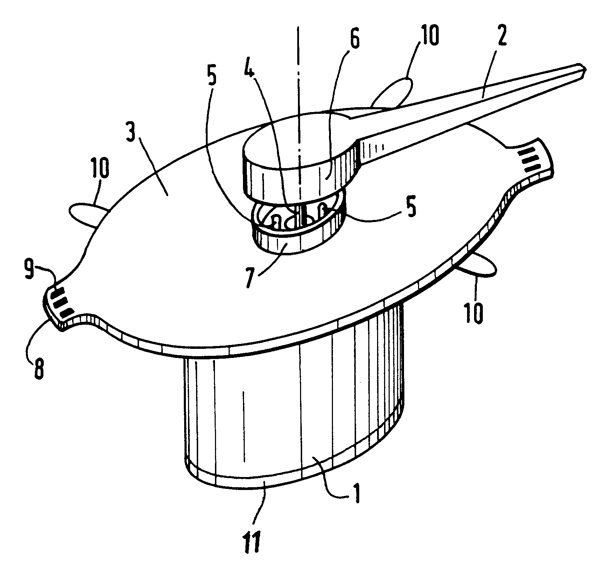

L'invention sera mieux comprise à l'aide de la description suivante de la forme de réalisation préférée du module de l'invention, en référence à la figure unique en annexe qui le représente en perspective.

Le module représenté sur la figure, qui est un module de tableau de bord de véhicule comportant une face avant, comprend un moteur d'entrainement 1, ici un moteur pas-à-pas, une aiguille indicatrice 2 entrainée par le moteur 1 et une carte électronique 3. L'aiguille 2, ici conductrice de lumière, est montée sur l'arbre de sortie 4 du mouvement 1.

L'arbre 4 du moteur 1 est monté dans des paliers supportés par deux flasques, un flasque supérieur constitué par la carte 3 et un flasque inférieur 11.

Le flasque 3, qui est ici circulaire, en matériau isolant et supporte un circuit imprimé et des composants, s'étend donc entre le corps du moteur 1 et l'aiguille 2, l'arbre 4 s'étendant à travers le flasque 3.

Le flasque 3 porte ici trois sources 10 d'éclairage d'un film sérigraphié, non représenté, faisant apparaitre des caractères destinés à être lus en liaison avec la position de l'aiguille 2. Ces sources peuvent être des lampes à incandescence, des diodes électroluminescentes, des films électroluminescents, par exemple.

En outre, le flasque 3 porte deux petites diodes électroluminescentes 5 d'éclairage de l'aiguille 2, disposées sous son pied 6, de part et d'autre de l'arbre de sortie 4 du moteur 1, ainsi que les composants de commande de ces sources 5. Le flasque 3 porte encore un alvéole d'éclairage 7, sous l'aiguille 2, à l'intérieur duquel sont disposées les diodes 5. L'alvéole 7 est ici constitué d'une petite paroi cylindrique. L'éclairage de l'aiguille 2 est ainsi très homogène. On notera que grâce à la disposition des deux diodes 5, en l'occurence de couleurs respectives différentes, par exemple verte et rouge, il est possible de faire varier la couleur dans laquelle apparait l'aiguille 2 au cours de sa rotation.

Cette variation de couleur de l'aiguille peut être brusque ou progressive. Pour une variation brusque, et faire passer la couleur de l'aiguille, par exemple, du vert au rouge en cas de vitesse ou régime excessif, il suffit de commuter les diodes 5 de l'une sur l'autre. Pour une variation progressive, on peut alimenter les diodes respectivement par deux signaux de commande à rapports cycliques variables et complémentaires. Ainsi, la couleur de l'aiguille peut varier du vert au rouge en passant par un mélange des deux, c'est-à-dire sensiblement du jaune.

Dans cette réalisation, les composants de puissance de la commande du moteur 1, avec leurs circuits de connexion, sont également montés sur le flasque 3.

Le flasque 3 comporte deux oreilles latérales d'indexation 8 diamétralement opposées sur lesquelles sont disposées des plages de connexion électrique 9. Ces oreilles 8 permettent d'indexer en rotation le flasque 3 par passage à travers un orifice ménagé dans la face avant du tableau de bord et, ici, par rotation jusqu'à encliquetage ou enclipsage. La connexion électrique aux plages 9 s'effectue par un support flexible de pistes conductrices, percé pour permettre le passage du flasque 3.

## Revendications

1. Module, d'un tableau de bord de véhicule comportant une face avant, comprenant une aiguille indicatrice (2), un moteur (1) d'entrainement de l'aiguille indicatrice par l'intermédiaire d'un arbre de sortie (4) du moteur (1) et un support (3) d'au moins une source (5) d'éclairage de l'aiguille indicatrice (2), le support (3) s'étendant sous le pied de l'aiguille indicatrice (2) et celui-ci étant éclairé directement par la source (5), caractérisé par le fait que ledit support est constitué par un flasque (3) portant un palier de l'arbre de sortie (4) du moteur (1).

2. Module selon la revendication 1, dans lequel le flasque (3) comporte un alvéole d'éclairage (7) à l'intérieur duquel est disposée la source (5) d'éclairage de l'organe indicateur (2).

3. Module selon l'une des revendications 1 et 2, dans lequel il est prévu sur le flasque (3) au moins une autre source (10) destinée à éclairer un film sérigraphié portant des caractères associés à l'organe indicateur (2).

4. Module selon l'une des revendications 1 à 3, dans lequel le flasque (3) comporte des oreilles (8) d'indexation sur la face avant.

5. Module selon la revendication 4, dans lequel des plages de connexion électrique (9) sont disposées sur les oreilles d'indexation (8).

6. Module selon l'une des revendications 1 à 5, dans lequel l'aiguille indicatrice (2) est éclairée par une source bicolore.

7. Module selon l'une des revendications 1 à 5, dans lequel il est prévu deux sources (5) d'éclairage de l'aiguille indicatrice (2).

8. Module selon la revendication 7, dans lequel les deux sources (5) d'éclairage de l'aiguille indicatrice (2) sont de couleurs respectives différentes.

9. Module selon la revendication 8, dans lequel les deux sources (5) d'éclairage de l'aiguille indicatrice (2) sont alimentées par des signaux à rapports cycliques variables et complémentaires.

10. Module selon l'une des revendications 1 à 9, dans lequel les moyens de commande du moteur (1) d'entrainement sont montés sur le flasque (3).

## Claims

1. Module for a vehicle dashboard comprising a front face, comprising an indicator needle (2), a motor (1) for driving the indicator needle through the intermediary of an output shaft (4) of the motor (1) and a support (3) for at least one source (5) for illuminating the indicator needle (2), the support (3) extending beneath the foot of the indicator needle (2) and the latter being illuminated directly by the source (5), characterised by the fact that said support is constituted by a cheek (3) supporting a bearing for the output shaft (4) of the motor (1).

2. Module according to Claim 1, in which the cheek (3) comprises an illumination alveolus (7) inside which is disposed the source (5) for illuminating the indicator member (2).

3. Module according to one of Claims 1 and 2, in which there is provided on the cheek (3) at least one other source (10) intended to illuminate a screen-printed film bearing characters associated with the indicator member (2).

4. Module according to one of Claims 1 to 3, in which the cheek (3) comprises lugs (8) for indexing on the front face.

5. Module according to Claim 4, in which electrical connection areas (9) are disposed on the indexing logs (8).

6. Module according to one of Claims 1 to 5, in which the indicator needle (2) is illuminated by a two-coloured source.

7. Module according to one of Claims 1 to 5, in which two sources (5) for illuminating the indicator needle (2) are provided.

8. Module according to Claim 7, in which the two sources (5) for illuminating the indicator needle (2) are of different respective colours.

9. Module according to Claim 8, in which the two sources (5) for illuminating the indicator needle (2) are supplied by signals having variable and complementary cyclic ratios.

10. Module according to one of Claims 1 to 9, in which the means for controlling the drive motor (1) are mounted on the cheek (3).

## Patentansprüche

1. Modul eines Fahrzeugarmaturenbretts mit einer Vorderseite, mit einer Anzeigenadel (2), einem Motor (1), um die Anzeigenadel mit Hilfe einer Abtriebswelle (4) des Motors (1) in Bewegung zu versetzen, sowie mit einem Träger (3) von wenigstens einer Quelle (5) zur Beleuchtung der Anzeigenadel (2), wobei der Träger (3) unter dem Fuß der Anzeigenadel (2) verläuft und diese unmittelbar durch die Quelle (5) beleuchtet wird, dadurch gekennzeichnet, daß der Träger von einer Backe (3) gebildet ist, welcher ein Lager der Abtriebswelle (4) des Motors (1) trägt.

2. Modul nach Anspruch 1, bei dem die Backe (3) eine Beleuchtungszelle (7) aufweist, in welcher die Quelle (5) zur Beleuchtung des Anzeigeelementes (2) angeordnet ist.

3. Modul nach einem der Ansprüche 1 und 2, bei welchem an der Backe (3) wenigstens eine weitere Quelle (10) zur Beleuchtung eines durch Serigraphie hergestellten Films vorgesehen ist, der dem Anzeigeelement (2) zugeordnete Zeichen trägt.

4. Modul nach einem der Ansprüche 1 bis 3, bei dem die Backe (3) Ohren (8) zum Weiterschalten an der Vorderseite aufweist.

5. Modul nach Anspruch 4, bei dem elektrische Anschlußbereiche (9) an den Ohren (8) zur Anpassung angebracht sind.

6. Modul nach einem der Ansprüche 1 bis 5, bei dem die Anzeigenadel (2) durch eine zweifarbige Quelle beleuchtet wird.

7. Modul nach einem der Ansprüche 1 bis 5, bei dem zwei Quellen (5) zur Beleuchtung der Anzeigenadel (2) vorgesehen sind.

8. Modul nach Anspruch 7, bei dem die beiden Quellen (5) zur Beleuchtung der Anzeigenadel (2) von jeweils unterschiedlicher Farbe sind.

9. Modul nach Anspruch 8, bei dem die beiden Quellen (5) zur Beleuchtung der Anzeigenadel (2) durch Signale mit veränderlichen und komplementären Zyklusverhältnissen gespeist werden.

10. Modul nach einem der Ansprüche 1 bis 9, bei dem die Mittel zur Steuerung des Antriebsmotors (1) an der Backe (3) angeordnet sind.
